# FASCICULE DE BREVET EUROPEEN

(11) **EP 1 361 677 B1**
(45) Date de publication et mention de la délivrance du brevet: **27.02.2013**
(21) Numéro de dépôt: 03291035.8
(22) Date de dépôt: 29.04.2003
(51) Int. Cl.: H04L 1/20, H04W 52/12, H04W 52/26, H04W 52/16

(54) **Procédé et dispositif de contrôle d'une commande de puissance en boucle externe**
Verfahren und Vorrichtung zur Regelung einer äusseren Sendeleistungsregelungsschleife
Method and apparatus for controlling an outer loop power control

(30) Priorité: 07.05.2002 FR 0205752
(43) Date de publication de la demande: 12.11.2003
(73) Titulaire: Alcatel Lucent, 75007 Paris (FR)
(72) Inventeur: Agin, Pascal, 94370 Sucy en Brie (FR)
(74) Mandataire: El Manouni, Josiane

(56) Documents cités:
- EP-A- 1 067 704
- EP-A- 1 164 714
- US-B1- 6 374 118

## Description

L'invention concerne le domaine des installations de télécommunications, et notamment les installations de télécommunications dites « à accès multiple par répartition de codes », plus connues sous l'acronyme anglais CDMA (pour « Code Division Multiple Access »).

Les installations de type CDMA, telles que par exemple les installations UMTS (pour « Universal Mobile Telecommunication System »), offrent de nombreux services, comme par exemple l'échange de données audio et/ou vidéo, la navigation (ou « browsing ») au sein de pages de données ou de sites (c'est-à-dire la commutation de paquets de données). Afin de permettre l'échange simultané de ces différents types de données de service, tout en les différenciant (par exemple pour des questions de niveaux de priorité différents ou de qualités de service différentes), chaque type est associé à un canal de transport. Ces canaux de transport font tout d'abord l'objet de différents traitements, tels que le codage de canal et l'entrelacement, puis ils font l'objet d'un multiplexage temporel pour former ce que l'homme de l'art appelle généralement un canal de transport composite codé (ou « CCTrCh »). Ce CCTrCh alimente alors un ou plusieurs canaux physiques sous une puissance donnée.

Toutes les données de services sont donc délivrées dans les canaux physiques sous une même puissance, quel que soit leur type. Or, comme indiqué ci-avant, différents types de services peuvent être associés à différentes qualités de service. Par exemple, un service d'appel vocal est associé à un indicateur de qualité désigné par l'acronyme BER (pour « Bit Error Rate ») d'environ 10⁻³, tandis qu'un service de commutation de circuit est associé à un indicateur de qualité BER d'environ 10⁻⁶. Pour atteindre ces différentes qualités de service (ou QoS), il faut généralement des niveaux de puissance différents.

Il peut également arriver que plusieurs services multiplexés soient associés à des qualités de service sensiblement identiques, mais requérant à un instant donné des niveaux de puissance différents, du fait de leurs caractéristiques (par exemple le débit ou le codage correcteur d'erreur).

Le niveau de puissance est généralement fixé par une boucle interne de contrôle de puissance à partir d'une valeur cible (primaire), généralement appelée SIRc (pour « Signal-to-Interference Ratio »). En d'autres termes, la boucle interne ajuste la puissance de transmission en fonction de la valeur cible SIRc. Afin de pouvoir ajuster la valeur cible SIRc en fonction du service à instaurer, il a été proposé de coupler la boucle interne à une boucle externe de contrôle de puissance. De telles boucles externes sont notamment décrites dans les documents brevets WO 99/05808, DE 199 30 747, WO 01/01600 et FR 01/07690.

Une fois qu'un service, ou que l'un des services d'une combinaison de services, a été choisi, la boucle externe de contrôle de puissance est donc activée sur cet unique service. La boucle externe détermine alors la valeur cible (primaire) minimale qui permettra d'atteindre la qualité de service associée à l'unique service choisi. Or, l'activation ne peut s'effectuer qu'à l'établissement de l'appel ou lorsqu'un nouveau service est requis, sous réserve que ce nouveau service requiert le niveau de puissance le plus élevé. Le choix de l'unique service s'effectue donc au début de l'appel, à priori à partir de simulations ou de mesures physiques.

Cette situation n'est pas satisfaisante dans la mesure où, plusieurs services et combinaisons de services pouvant être envisagés (par exemple AMR, PS 64 kbps, PS 128 kbps, PS 384 kbps, AMR et PS 64 kbps, AMR et PS 128 kbps, AMR et PS 384 kbps, PS 64 kbps et PS 384 kbps), il est particulièrement difficile de déterminer au sein de chaque combinaison le service qui requiert la puissance la plus importante compte tenu de toutes les qualités de service requises. Cela est d'autant plus difficile que, pour une même combinaison de services, le service qui requiert la puissance la plus forte dépend généralement étroitement des qualités de service requises pour les autres services de cette combinaison.

De plus, certains paramètres auxiliaires, tels que le type de codage des canaux et plus généralement l'environnement dans lequel les données circulent, peuvent influer sur le niveau de puissance requis par un service pour atteindre la qualité de service associée. Or, les boucles externes ne permettent pas de prendre en compte ces paramètres auxiliaires.

Les boucles externes actuelles ne sont donc pas, en l'état, adaptées à des services coexistant sensiblement simultanément au sein d'un même réseau.

Il a certes été proposé dans le document brevet US 6,374, 118 une boucle externe permettant de contrôler l'ajustement de la valeur cible primaire d'une boucle interne de contrôle de puissance d'une installation de télécommunications, en alimentant cette bouche interne avec une valeur cible primaire qui correspond à un service qui est sélectionné dynamiquement parmi au moins deux services différents qui sont présents dans l'installation. Mais, cette solution ne s'avère pas entièrement satisfaisante.

L'invention a donc pour but de remédier à tout ou partie des inconvénients précités.

Elle propose à cet effet un procédé de contrôle de la boucle externe de contrôle d'ajustement d'une valeur cible primaire, par exemple de type SIRc, d'une boucle interne de contrôle de puissance d'une installation de tétécommunications multiservices, la boucle externe alimentant la boucle interne avec une valeur cible primaire correspondant à un service sélectionné dynamiquement parmi au moins deux services déférents présents dans l'installation. Ce procédé se caractérise par le fait, d'une part, que l'on associe chaque service à au moins une valeur cible tertiaire (qui peut être représentative d'une qualité de service cible) et au moins un indicateur de qualité tertiaire associé (qui peut être représentatif d'une qualité de service estimée), et d'autre part, que l'on sélectionne dynamiquement le service en fonction d'un critère choisi consistant à calculer pour chaque service qui n'a pas atteint sa qualité de service l'écart (valeur positive ou négative) entre sa valeur cible tertiaire et son indicateur de qualité tertiaire, puis à retenir le service présentant l'écart le plus grand.

En d'autres termes, on ne considère que les services qui n'ont pas atteint leur qualité de service cible, puis on retient celui qui nécessite la puissance la plus importante.

Les termes « service » et « cantal de transport » sont ici utilisés indifféremment. On notera cependant qu'un même service peut utiliser différents canaux de transport («TrGH»). Par exemple, pour la parole utilisant le codage AMR (pour « Adaptive Multi-Rate »), trois canaux de transport différents sont généralement utilisés, respectivement pour des bits dits de classe A, B et C correspondant à des niveaux différents d'importance des bits. On notera qu'il est également possible qu'une qualité de service ne soit pas indiquée pour un canal de transport donné. Par exemple, dans le cas de l'AMR, on cherche généralement à atteindre un taux d'erreur ou BER de 10⁻³ pour le TrCH portant uniquement les bits de classe A. Cependant, même lorsqu'une qualité de service n'est pas imposée, on peut fixer une qualité de service de manière plus ou moins arbitraire.

Par conséquent, le mot « service » couvre ici les différentes situations dans lesquelles une certaine qualité de service (cible) doit être atteinte pour un certain canal de transport, indépendamment de la manière dont sont définis les services et les canaux de transport. Un exemple important d'application correspond au cas ou on a simultanément une connexion utilisant le codage AMR et une connexion en mode paquet (notamment une connexion paquet à 384 kbps). Dans ce cas, cinq canaux de transport (ou OCH, pour « Dedicated CHannel » en anglais) peuvent par exemple être utilisés : trois canaux pour les différentes classes de bits de l'AMR, un canal pour la connexion paquet, et un canal supplémentaire habituellement utilisé pour la signalisation. Un indicateur de qualité de service (tel que notamment le BLER) ne peut alors être estimé que pour le TrCH portant les bits de classe A de l'AMR et pour le TrCH utilisé pour la connexion paquet (donc seulement pour deux TrCHs parmi les quatre TrCHs).

Par conséquent, l'ajustement dynamique classique des paramètres de la boucle externe ne s'applique qu'aux TrCHs pour lesquels l'indicateur de qualité de service peut être estimé On choisit donc dynamiquement un service de référence parmi les services pour lesquels la qualité de service peut être estimée et utilisée dans la boucle externe. Par exemple, pour le BLER ce n'est possible que pour les canaux de transport TrCHs dans lesquels un CRC est utilisé.

D'une manière générale, le service de référence peut être choisi parmi un sous-ensemble de canaux de transport.

Par ailleurs, l'invention s'applique à tout type de boucle externe et de boucle interne, et en particulier aux boucles externes qui alimentent les boucles internes à partir de premier et second indicateurs de qualité secondaires respectivement associés à de première et seconde valeurs cibles secondaires.

Le procédé selon l'invention peut également comporter en combinaison la phase de détermination, par la boucle externe, de la, valeur cible primaire, correspondant au service sélectionné, destinée à alimenter la boucle interne.

Préférentiellement, la boucle externe procède à la détermination de la valeur cible primaire de façon périodique.

En outre, dans le procédé selon l'invention, la sélection de service est de préférence effectuée périodiquement, mais elle pourrait régalement être effectuée sur ordre.

Lorsque le procédé est périodique, la fréquence de la sélection de service et la fréquence de détermination de la valeur cible primaire peuvent être identiques ou différentes. Lorsque ces fréquences sont différentes, il est préférable que celle de la détermination soit plus élevée que celle de la sélection. En d'autres termes, il est préférable que là détermination de valeur cible primaire par la boucle externe soit effectuée plus souvent que la sélection de service;

L'invention propose également un dispositif de contrôle de la boucle externe de contrôle d'ajustement de la valeur cible primaire (par exemple SIRc) d'une boucle interne de contrôle de puissance d'une installation de télécommunications multiservices, la boucle externe de contrôle alimentant la boucle interne avec une valeur cible primaire correspondant à un service sélectionné dynamiquement parmi au moins deux services différents présents dans l'installation. Ce dispositif se caractérisé par le fait que chaque service est associé à au moins une valeur cible tertiaire (par exemple représentative d'une qualité de service cible) et au moins un indicateur de qualité tertiaire associé (par exemple représentative d'une qualité de service estimée), et qu'il comprend des moyens de contrôle capables de sélectionner dynamiquement le service en fonction d'un critère choisi consistant à calculer pour chaque service qui n'a pas atteint sa qualité de service l'écart (valeur positive ou négative) entre sa valeur cible tertiaire et son indicateur de qualité tertiaire, puis à retenir le service dont l'écart est le plus grand.

Les moyens de contrôle du dispositif peuvent être utilisés pour alimenter tout type de boucle externe couplée à tout type de boucle interne, et en particulier une boucle externe qui alimente une boucle interne avec une valeur cible primaire déterminée a partir de premier et second indicateurs de qualité secondaires associés à de première et seconde valeurs cibles secondaires.

Le dispositif selon l'invention peut également comporter la boucle externe de manière à constituer un dispositif intégré pouvant être couplé à une boucle interne.

Préférentiellement, la boucle externe, qu'elle soit intégrée ou non au dispositif, peut être agencée de manière à déterminer la valeur cible primaire de façon périodique.

Par ailleurs, les moyens de contrôle sont de préférence agencés de manière à procéder à la sélection de service de façon périodique. Mais ils pourraient également procéder sur ordure.

Lorsque le traitement est périodique, la fréquence de la sélection de service et la fréquence de la détermination de la valeur cible primaire peuvent être identiques ou différentes. Lorsque ces fréquences sont différentes, il est préférable que celle de la détermination soit plus élevée que celle de la sélection. En d'autres termes, il est préférable que la détermination de valeur cible primaire par la boucle externe soit effectuée plus souvent que la sélection de service par les moyens de contrôle.

Qu'il s'agisse du dispositif ou du procédé, il est avantageux de choisir les indicateurs de qualité secondaires et tertiaires dans un groupe comprenant au moins les "BER" (pour "Bit Error Rate"), "BLER" (pour « Block Error Rate ») et « raw BER » (et notamment les exemples de raw BER que sont les « transport channel BER » et « physical channel BER »).

L'invention propose en outre une station mobile (par exemple de type « user equipment ») et un équipement de réseau de télécommunications (par exemple une station de base, telle qu'un « Node B » dans une installation UMTS, ou un contrôleur de station de base, tel qu'un RNC (pour « Radio Network Controller ») comportant un dispositif du type de celui présenté ci-avant.

Le dispositif, la station, l'équipement et le procédé selon l'invention sont particulièrement bien adaptés, bien que de façon non exclusive, aux installations de télécommunications dites « à accès multiple par répartition de codes » (ou CDMA), et notamment les installations de type UMTS.

D'autres caractéristiques et avantages de l'invention apparaîtront à l'examen de la description détaillée ci-après, et des dessins annexés, sur lesquels :
- la figure 1 illustre de façon schématique l'architecture générale d'une installation de télécommunications mobiles, de type UMTS,
- la figure 2 illustre de façon schématique un exemple de réalisation d'un dispositif selon l'invention.

Les dessins annexés sont, pour l'essentiel, de caractère certain. En conséquence, ils pourront non seulement servir à compléter l'invention, mais aussi contribuer à sa définition, le cas échéant.

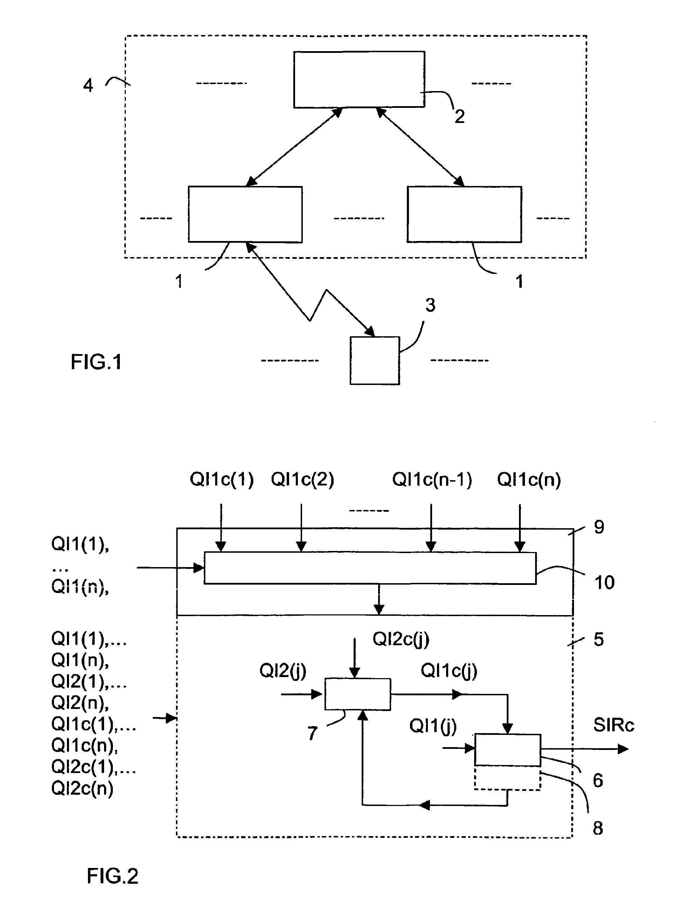

On se réfère tout d'abord à la figure 1 pour décrire un exemple d'installation de télécommunications dans laquelle peut être utilisé un dispositif selon l'invention, et dans lequel peut être mis en oeuvre le procédé selon l'invention. Dans ce qui suit, on considérera, à titre d'exemple illustratif, que l'installation de télécommunications est de type UMTS (pour « Universal Mobile Telecommunication System »).

L'installation de télécommunications comprend des stations de base fixes 1, également appelées « Node B » dans le cas de l'UMTS, des contrôleurs de station de base 2, également appelés « RNC » (pour « Radio Network Controller ») dans le cas de l'UMTS, et des postes de télécommunications 3, pour certains mobiles, également appelés « User equipment » dans le cas de l'UMTS. L'ensemble 4, constitué des stations de base 1 et des contrôleurs RNC 2, est appelé UTRAN (pour « UMTS Terrestrial Radio Access Network ») dans le cas de l'UMTS.

Les postes 3 échangent des données, notamment de services de différents types, entre eux, généralement par l'intermédiaire des stations de base 1, ainsi qu'avec lesdites stations de base 1, notamment pour les mises à jours d'informations et pour les liaisons avec des terminaux de traitement et de service. Certains postes 3 de type mobile, connectés à un UTRAN, peuvent également communiquer avec un poste (ou terminal) de type fixe et par conséquent non connecté à un UTRAN.

Les contrôleurs 2 sont en charge du contrôle du réseau et des actions effectuées par les différents postes 3, tandis que les stations de base 1 sont principalement des émetteurs/récepteurs.

Les services offerts par l'installation sont associés à des qualités de service différentes (ou indicateurs de qualité (QI)) définies, par exemple, par des taux d'erreur après décodage de canal, tels que le « BER » (pour « Bit Error Rate »), le « BLER » (pour « Block Error Rate »), ou le « FER » (pour « Frame Error Rate »). On peut également utiliser un taux d'erreur avant décodage de canal, tel que le « raw BER », et plus préférentiellement le « transport channel BER » et le « physical channel BER » qui sont des métriques qui peuvent notamment être reportées par un Node B vers un RNC. Ces différentes qualités de service et ces différents indicateurs de qualité sont notamment présentés dans le document « TS 25.215 V3.8.0 (2001 - 09) » du 3GPP (3rd Generation Partnership Project) - Technical Specification Group Radio Access Network - Physical layer - Measurements (FDD).

Le dispositif selon l'invention, illustré sur la figure 2, est destiné à contrôler la boucle externe 5 de contrôle d'ajustement de la valeur cible (primaire) d'une boucle interne (non représentée) de contrôle de puissance de l'installation.

Dans une installation, la boucle interne de contrôle de puissance a pour fonction de maintenir, pour chaque liaison entre une station de base 1 et un poste 3, un paramètre représentatif de la qualité de la transmission, tel que le rapport signal sur interférence ou SIR (pour « Signal-to-Interference Ratio »), le plus près possible d'une valeur cible (primaire) SIRc. Un SIR trop élevé provoque une augmentation des interférences dans l'installation, et donc une dégradation des performances de l'installation, tandis qu'un SIR trop faible provoque une dégradation de la qualité de service pour la liaison considérée. La régulation du SIR est donc particulièrement importante au sein d'une installation. Celle-ci peut, par exemple, s'effectuer comme indiqué ci-après.

Dans le sens ascendant (poste 3 vers station de base 2) la station de base 2 estime périodiquement le SIR et le compare à la valeur cible SIRc. Si le SIR estimé présente une valeur inférieure au SIRc, la station de base 2 demande au poste 3 d'augmenter sa puissance d'émission. En revanche, si le SIR estimé présente une valeur supérieure au SIRc, la station de base 2 demande au poste 3 de diminuer sa puissance d'émission.

Le SIRc étant choisi en fonction de la qualité de service requise, et celle-ci évoluant lors de chaque changement de service, il faut donc fréquemment modifier sa valeur (primaire) pour adapter la transmission au type de service en cours.

La boucle externe 5 est prévue à cet effet. D'une manière générale, une boucle externe est chargée de régler la valeur du SIRc de sorte que la qualité de service désirée soit atteinte en utilisant le plus faible niveau de puissance possible. Plus précisément, elle est chargée de comparer, généralement de façon périodique, la qualité de service en cours (ou un indicateur de qualité représentatif de cette qualité de service) à la qualité de service requise (ou qualité cible) qui correspond au service devant être instauré et sur lequel elle est « calée ». Si la qualité de service en cours (ou estimée) est inférieure à la qualité cible associée au service qui doit être instauré, la boucle externe 5 augmente le SIRc (cible) de la boucle interne. En revanche, si la qualité de service estimée est supérieure à la qualité cible, la boucle externe 5 diminue le SIRc (cible) de la boucle interne.

Comme on le verra de façon plus détaillée plus loin, la boucle externe 5 peut, par exemple, assurer la régulation du SIRc (cible) à partir d'un ou plusieurs indicateurs de qualité QI, généralement choisis parmi ceux présentés ci-avant (BER, BLER, FER et raw BER (et notamment les « transport channel BER » et « physical channel BER » qui sont des métriques qui peuvent notamment être reportées par un Node B vers un RNC).

Les « transport channel BER » et « physical channel BER » sont deux exemples particuliers de raw BER (ou BER brut) qui peuvent être avantageusement utilisés avec la norme UMTS. Il est ici rappelé que le raw BER désigne le taux d'erreur brut, c'est-à-dire avant le décodage de canal. Il est généralement estimé par le récepteur lors d'une comparaison entre les données reçues, avant décodage correcteur d'erreur, et les données correspondantes, obtenues après décodage correcteur d'erreur puis recodage au moyen du même code correcteur d'erreur qu'à l'émission.

Le SIRc (cible) est donc étroitement lié aux indicateurs de qualité QI, eux mêmes représentatifs de la qualité de service qui correspond au service à instaurer.

De préférence, chaque poste 3 est équipé d'une boucle externe de contrôle 5, de manière à pouvoir estimer, sur sa partie de réception de données (ou partie descendante), la qualité nécessaire à l'interprétation des données reçues. De même, chaque contrôleur RNC 2 est de préférence équipé d'une boucle externe de contrôle 5, de manière à pouvoir estimer, sur sa partie d'émission (ou partie ascendante), la qualité nécessaire à l'émission des données.

Par ailleurs, la boucle interne est, pour une partie, intégrée dans chaque poste 3 et, pour une autre partie, dans chaque station de base 1. Ainsi, dans le sens ascendant une station de base 1 peut estimer la qualité de service (indicateur de qualité primaire, tel que le SIR, associée à des données de service reçues et la comparer à une qualité de service cible (indicateur de qualité cible primaire, tel que le SIRc) qui correspond au type du service, et envoyer au poste 3 émetteur une commande de contrôle de puissance de transmission, de sorte que ce poste 3 modifie sa puissance de transmission en fonction de la commande envoyée par la station de base 2.

Comme indiqué ci-avant, le dispositif selon l'invention est destiné à contrôler la boucle externe 5, de sorte qu'elle délivre à la boucle interne un SIRc (cible) adapté, le plus souvent possible, aux différents services qui coexistent au sein du réseau. Plus précisément, en présence de services multiples (au moins de deux types différents), le dispositif est conçu de manière à sélectionner de façon dynamique, selon un critère choisi, l'un d'entre eux, afin que la boucle externe 5 détermine une valeur primaire SIRc qui lui correspond.

Comme on le verra plus loin, de nombreux critères de sélection peuvent être utilisés, l'important étant qu'ils permettent de sélectionner parmi les services qui n'ont pas encore atteint leur qualité de service, celui dont la qualité de service estimée, associée, est à un instant donné la plus éloignée de sa qualité de service cible.

Le dispositif peut être couplé à de nombreux types de boucle externe 5, indépendamment du type de boucle interne utilisé. Il peut également intégrer la boucle externe 5, comme illustré sur la figure 2.

Dans ce qui suit, on décrira un exemple particulier de boucle externe 5 « à deux étages ». Une telle boucle externe étant décrite en détail dans le document brevet FR 01/07690, seules ses fonctions principales seront ici présentées en référence à la figure 2.

La boucle externe 5 comporte tout d'abord un premier étage 6 destiné à délivrer à la boucle interne une valeur cible primaire SIRc à partir d'une première valeur cible secondaire QI1c et d'un premier indicateur de qualité secondaire QI1 (dont la valeur a été estimée au sein de l'installation).

La boucle externe 5 comporte également un second étage 7 destiné à délivrer au premier étage 6 la première valeur cible secondaire QI1c à partir d'un second indicateur de qualité secondaire QI2 (dont la valeur a été estimée au sein de l'installation) et d'une seconde valeur cible secondaire QI2c.

Si QI2 est inférieure à QI2c, QI1c en cours est augmentée d'une valeur δ2_{up.} En revanche, si QI2 est supérieure à QI2c, QI1c en cours est diminuée d'une valeur δ2_{down.}

Par ailleurs, si QI1 est inférieure à QI1c, SIRc en cours est augmentée d'une valeur δ1_{up.} En revanche, si QI2 est supérieure à QI2c, SIRc en cours est diminuée d'une valeur δ 1_{down.}

Les indicateurs de qualité QIi (ici i=1,2) sont de préférence choisis parmi ceux présentés ci-avant (BER, BLER, FER et raw BER (et notamment les « transport channel BER » et « physical channel BER »)). Mais il pourrait s'agir d'autres indicateurs, dès lors qu'ils sont représentatifs d'une qualité de service au sein de l'installation.

Egalement de préférence, les premier QI1 et second QI2 indicateurs secondaires sont différents l'un de l'autre. Mais, ils pourraient être identiques, bien que cela n'offre pas un réel intérêt dans une boucle externe à deux étages.

QI2 est généralement l'indicateur de qualité donné à l'établissement de l'appel et correspondant à la qualité de service requise (cible). Cet indicateur n'est pas toujours approprié. Il s'agit généralement du BER ou du BLER. En revanche, on choisit généralement un indicateur QI1 plus précis, comme par exemple le raw BER, qui est représentatif d'une qualité de transmission.

Dans une variante matérialisée sur la figure 2 par des tirets, le premier étage 6 peut comporter un module de couplage 8 au second étage 7, de manière à n'ajuster la première valeur cible QI1c que si le premier étage 6 à déjà convergé.

Plus précisément, il s'agit de rendre le traitement plus stable en évitant que QI1c et SIRc soient augmentés ou diminués sans pouvoir être atteints respectivement par QI1 et SIR. Pour ce faire, on peut procéder comme suit :
- si |QI1 - QI1c| < η, et
   * si QI2 < QI2c, alors QI1c est augmentée d'une valeur δ1ᵤₚ, ou
   * si QI2 > QI2c, alors QI1c est diminuée d'une valeur δ1_{down}
- si |QI1 - QI1c| > η, aucune action n'est entreprise.

Comme illustré sur la figure 2, le dispositif selon l'invention comprend un module de contrôle 9 qui reçoit de l'installation des données représentatives des différents services qui coexistent en son sein. Ces données sont, par exemple, des indicateurs de qualité tertiaires cibles (QI1c(j), ici j = 1 à n) associés aux n différentes qualités de service correspondant aux n différents services coexistant au sein de l'installation. Les indicateurs de qualité tertiaires cibles (QI1c(j)) peuvent être accompagnés d'indicateurs de qualité tertiaires (QI1(j), ici j = 1 à n) qui viennent d'être estimés.

Ces indicateurs de qualité tertiaires sont de préférence choisis parmi ceux présentés ci-avant (BER, BLER, FLER et raw BER (et notamment les « transport channel BER » et « physical channel BER »)). Mais, il pourrait s'agir d'autres indicateurs, dès lors qu'ils sont représentatifs, directement ou indirectement, d'une qualité de service, elle-même représentative d'un service de l'installation.

Dans l'exemple illustré, il s'agit des premiers indicateurs de qualité tertiaires estimés QI1 (j) et cibles QI1c(j), par exemple de type raw BER. Mais, il pourrait également s'agir de seconds indicateurs de qualité estimés QI2(j) et cibles QI2c(j), par exemple de type BER ou BLER, ou bien d'indicateurs de qualité différents de ceux utilisés par la boucle externe 5.

On pourrait notamment utiliser une boucle externe effectuant son ajustement du SIRc sur la base des blocs de données reçus. Cette variante de fonctionnement de boucle externe utilise le BLER pour Q2. Si le bloc reçu est correct (BLER=0), on diminue la valeur de SIRc, tandis qu'on l'augmente lorsque le bloc reçu n'est pas correct (BLER=1).

Le module de contrôle 9 comprend un module de calcul 10 chargé de sélectionner dynamiquement, de façon contrôlée et selon un critère choisi, le type de service qui requiert, pour une liaison donnée et à un instant donné, la puissance de transmission la plus importante et donc la qualité de service la plus élevée (associée au SIRc le plus élevé), par exemple.

Cette sélection peut s'opérer selon plusieurs critères différents. Dans une première mise en oeuvre, le module de calcul 10 reçoit, par exemple, les valeurs des qualités de service cibles (tertiaires) associées aux différents services, et la valeur de la qualité de service estimée (en cours). Puis, il détermine parmi tous les services ceux qui n'ont pas atteint leur qualité de service, c'est-à-dire ceux qui nécessitent le plus de puissance.

L'expression « ceux qui n'ont pas atteint leur qualité de service » doit être comprise dans la définition donnée ci-après. Il s'agit en effet de déterminer parmi les services ceux qui ont plus besoin de puissance que les autres pour atteindre leur qualité de service (QoS) cible. Pour ce faire, on peut choisir le service qui maximise | QoS - QoS_cible| parmi tous les services vérifiant la relation QoS > QoS_cible ou la relation inverse QoS < QoS_cible, selon le type d'indicateur de qualité de service choisi. Par exemple, lorsque l'indicateur de qualité de service choisi est raw BER, BER ou BLER, on utilise la relation QoS > QoS_cible. En revanche, si l'indicateur de qualité de service choisi est par exemple Q1 = - raw BER, alors on utilise la relation QoS < QoS_cible. L'expression « qui n'a pas atteint sa qualité de service » désigne par conséquent un service qui vérifie, par exemple, l'une des deux relations précitées.

Pour les services retenus, le module de calcul 10 calcule donc l'écart (valeur positive ou négative) entre la valeur de leur qualité de service cible et la valeur de la qualité de service en cours, de manière à retenir le service dont l'écart est le plus grand et qui vérifie l'une des relations précitées. En d'autres termes, on sélectionne le service qui requiert le plus de puissance à un instant donné pour atteindre sa qualité de service cible, compte tenu de la puissance en cours (ou de la valeur de l'indicateur de qualité en cours qui lui correspond).

Une notion de seuil peut être envisagée pour éviter des changements de service trop fréquents, reposant notamment sur des écarts (positifs ou négatifs) de faible amplitude.

Le module de contrôle 9 adresse alors à la boucle externe 5 des données représentatives du service qui vient d'être sélectionné par son module de calcul 10, de sorte qu'il détermine le SIRc (cible de la boucle interne) adapté au service sélectionné. Plus précisément, dans cet exemple, la boucle externe 5 détermine parmi les premier (QI1, QI1c) et second (QI2, QI2c) indicateurs de qualité estimés et cibles secondaires qu'il reçoit de l'installation ceux qui correspondent au service sélectionné, puis elle alimente ses premier 6 et second 7 étages avec les indicateurs ainsi déterminés.

Bien entendu, la boucle externe 5 pourrait effectuer l'ajustement du SIRc à partir d'un seul indicateur de qualité estimé secondaire et d'un seul indicateur de qualité cible secondaire, ou d'une toute autre manière.

Dans une seconde mise en oeuvre, le module de calcul 10 reçoit des indicateurs de qualité cibles tertiaires associés aux différents services, ainsi que les premiers indicateurs de qualité estimés tertiaires. Dans ce qui suit, on considère, à titre d'exemple, que la sélection s'effectue à l'aide d'un unique indicateur cible tertiaire (le premier QI1c), mais il pourrait s'effectuer à l'aide de tout autre indicateur cible tertiaire, comme par exemple QI2c.

Le module de calcul 10 détermine parmi tous les services ceux qui n'ont pas atteint leur qualité de service, c'est-à-dire ceux qui nécessitent le plus de puissance. Pour les services retenus, il calcule l'écart Δ(j) entre la valeur de son (premier) indicateur de qualité cible tertiaire QI1c(j) et la valeur de son (premier) indicateur de qualité estimé tertiaire QI1(j). Puis, il compare les différents écarts Δ(j) et retient le service présentant l'écart le plus grand et qui vérifie l'une des relations précitées. En d'autres termes, on sélectionne le service qui a le plus besoin de puissance, à un instant donné, pour atteindre la valeur de son indicateur de qualité cible, compte tenu de la valeur de l'indicateur de qualité en cours qui lui correspond.

Une notion de seuil peut être envisagée pour éviter des changements de service trop fréquents, reposant notamment sur des écarts (positifs ou négatifs) de faible amplitude.

Le module de contrôle 9 adresse alors à la boucle externe 5 des données représentatives du service qui vient d'être sélectionné par son module de calcul 10, de sorte qu'il détermine le SIRc (cible de la boucle interne) adapté au service sélectionné. Plus précisément, la boucle externe 5 détermine parmi les premier (QI1, QI1c) et second (QI2, QI2c) indicateurs de qualité estimés et cibles secondaires qu'il reçoit de l'installation ceux qui correspondent au service sélectionné, puis elle alimente ses premier 6 et second 7 étages avec les indicateurs ainsi déterminés.

Bien entendu, la boucle externe 5 pourrait effectuer l'ajustement du SIRc à partir d'un seul indicateur de qualité estimé secondaire et d'un seul indicateur de qualité cible secondaire.

Comme indiqué précédemment, la ou les variables, utilisées pour effectuer la sélection du service qui a le plus besoin de puissance à un instant donné, peuvent être indirectement représentatives de la qualité de service, comme c'est notamment le cas des indicateurs de qualité en général, et plus particulièrement de raw BER. Mais, elles peuvent être également directement représentatives de la qualité de service (QoS), comme c'est par exemple le cas du BLER.

Par ailleurs, il n'est pas obligatoire que le ou les indicateurs de qualité QI (tertiaires), utilisés pour effectuer la sélection du service qui a le plus besoin de puissance à un instant donné, soient identiques à ceux (secondaires) utilisés par la boucle externe 5.

Le module de contrôle 9 effectue préférentiellement sa sélection de façon périodique. Mais, cela n'est pas une obligation. On peut en effet envisager que ledit module 9 n'effectue une sélection qu'en cas de réception d'une instruction spécifique.

Dans le cas d'un fonctionnement périodique, on peut envisager deux périodes différentes, la première concernant la sélection du service à instaurer, la seconde concernant la détermination par la boucle externe 5 du SIRc correspondant au service sélectionné. Ces deux périodes peuvent être identiques ou différentes. Lorsque ces périodes ne sont pas identiques, il est préférable que la seconde période (de détermination du SIRc) soit plus courte que la première période (de sélection). Cela permet en effet d'éviter d'activer à chaque période la boucle externe 5 avec un nouveau service qui la contraindrait à effectuer une nouvelle détermination de SIRc et non un simple ajustement de sa valeur précédente. Cela pourrait en effet provoquer des divergences de la boucle externe 5.

Comme indiqué précédemment, le dispositif selon l'invention peut ne comporter que son module de contrôle 9, mais il peut également être constitué de la combinaison d'une boucle externe 5 et d'un module de contrôle 9.

Par conséquent, lorsque le dispositif est constitué de la combinaison précitée, il peut être implanté dans chaque poste 3 de l'installation et dans chaque contrôleur RNC 2. Dans le cas contraire, il peut être installé dans tout équipement de l'installation, dès lors que celui-ci à accès aux données échangées, et en particulier dans les postes 3, les contrôleurs 2 (ou RNC), les stations de base 1, ainsi que dans un boîtier dédié indépendant d'un poste 3, d'une station 1 (ou Node B) ou d'un RNC 2 (bien que cela ne soit pas particulièrement avantageux).

Le module de contrôle 9 (et de calcul 10) du dispositif selon l'invention et/ou la boucle externe 5, peuvent être réalisés sous la forme de module(s) logiciel(s) ("software"). Mais ils peuvent être également réalisés, au moins en partie, sous la forme de circuits électroniques ("hardware"), ou encore sous la forme de combinaisons de modules logiciels et de circuits électroniques.

L'invention offre également un procédé de contrôle de la boucle externe de contrôle d'ajustement d'une valeur cible primaire, par exemple de type SIRc, d'une boucle interne de contrôle de puissance d'une installation de télécommunications multiservices, la boucle externe 5 délivrant à la boucle interne une valeur cible primaire correspondant à un service.

Ce procédé peut être mis en oeuvre à l'aide du dispositif présenté ci-avant. Les fonctions et sous-fonctions principales et optionnelles assurées par les étapes de ce procédé étant sensiblement identiques à celles assurées par les différents moyens constituants le dispositif décrit ci-avant, seules seront résumées ci-après les étapes mettant en oeuvre les fonctions principales du procédé selon l'invention.

Le procédé selon l'invention consiste, en présence, dans l'installation, d'au moins deux services différents, à sélectionner dynamiquement l'un de ces services en fonction d'un critère choisi, de sorte que la boucle externe 5 détermine une valeur primaire correspondant au service sélectionné.

Dans un mode de réalisation avantageux, chaque service peut être associé à au moins une valeur cible tertiaire (qui peut être représentative d'une qualité de service cible) et à au moins un indicateur de qualité tertiaire associé (qui peut être représentatif d'une qualité de service estimée). Dans ce cas, le critère de sélection peut consister à calculer pour chaque service qui n'a pas atteint sa qualité de service l'écart (valeur positive ou négative) entre sa valeur cible tertiaire et son indicateur de qualité tertiaire, puis à retenir celui dont l'écart est le plus grand.

Le procédé selon l'invention peut également comporter en combinaison la phase de détermination par la boucle externe 5 de la valeur cible primaire SIRc destinée à alimenter la boucle interne.

Par ailleurs, les phases de sélection de service et/ou de détermination de la valeur cible primaire peuvent être effectuées périodiquement ou sur ordre (à réception d'une instruction spécifique). Dans le cas d'un procédé périodique, les périodicités des phases de sélection et de détermination peuvent être identiques ou différentes. Lorsqu'elles sont différentes, il est préférable que la fréquence de la phase de détermination soit plus grande que celle de la phase de sélection pour éviter que la boucle externe 5 ne diverge.

L'invention ne se limite pas aux modes de réalisation de dispositif, d'équipement, de station de base, de contrôleur et de procédé décrits ci-avant, seulement à titre d'exemple, mais elle englobe toutes les variantes que pourra envisager l'homme de l'art dans le cadre des revendications ci-après.

Ainsi, on a décrit un exemple de boucle externe à deux étages, couplée au module de contrôle du dispositif. Mais, l'invention s'applique à tout type de boucle externe à deux étages, quel que soit le mode de réalisation de ces étages, ainsi qu'à tout autre type de boucle externe, indépendamment du type de boucle interne utilisé.

Par ailleurs, l'invention s'applique à tout type d'indicateur de qualité, qu'il soit directement ou indirectement représentatif d'une qualité de service.

## Revendications

1. Procédé de contrôle d'une boucle externe (5) de contrôle d'ajustement d'une valeur cible primaire (SIRc) d'une boucle interne de contrôle de puissance dans une installation de télécommunications, ladite boucle externe (5) alimentant ladite boucle interne avec une valeur cible primaire (SIRc) correspondant à un service sélectionné dynamiquement parmi au moins deux services différents présents dans l'installation, **caractérisé en ce que** l'on associe chaque service à au moins une valeur cible tertiaire (QI1c(j)) et au moins un indicateur de qualité tertiaire (QI1(j)) associé, et **en ce que** l'on sélectionne dynamiquement ledit service en fonction d'un critère choisis consistant à calculer pour chaque service qui n'a pas atteint sa qualité de service l'écart entre sa valeur cible tertiaire (QI 1c(j)) et son indicateur de qualité tertiaire (QI1(j)), puis à retenir le service présentant l'écart le plus grand.

2. Procédé selon la revendications 1, **caractérisé en ce que** chaque valeur cible tertiaire est représentative d'une qualité de service cible et chaque indicateur de qualité tertiaire est représentatif d'une qualité de service estimée.

3. Procédé selon l'une des revendications 1 et 2, **caractérisé en ce qu'**il comprend une étape dans laquelle ladite boucle externe (5) détermine ladite valeur cible primaire (SIRc) correspondant audit service sélectionné.

4. Procédé selon la revendication 3, **caractérisé en ce que** ladite boucle externe (5) détermine ladite valeur cible primaire (SIRc) à partir de premier (QI1) et second (QI2) indicateurs de qualité secondaires respectivement associés à de première (QI1c) et seconde (QI2c) valeurs cibles secondaires représentatives de ladite valeur cible primaire (SIRc.)

5. Procédé selon l'une des revendications 1 à 4, **caractérisé en ce que** ladite boucle externe procède à la détermination de la valeur cible primaire de façon périodique.

6. Procédé selon l'une des revendications 1 à 5, **caractérisé en ce que** l'on procède à ladite sélection de service sur ordre.

7. Procédé selon l'une des revendications 1 à 5, **caractérisé en ce que** l'on procède à ladite sélection de service de façon périodique.

8. Procédé selon la combinaison des revendication 5 et 7, **caractérisé en ce que** les périodicités de la sélection de service et de la détermination de la valeur ciblé primaire (SIRc) sont différentes.

9. Procédé selon la revendication 8, **caractérisé en ce que** la périodicité de ladite détermination est supérieure à celle de ladite sélection.

10. Procédé selon l'une des revendications 1 à 9, **caractérisé en ce que** lesdits indicateurs de qualité secondaires et tertiaires sont choisis dans un groupe comprenant au moins les « BER», BLER » et « raw BER».

11. Procédé selon l'uns des revendications à 10, **caractérisé en ce que** la valeur cible primaire est le « SIR ».

12. Dispositif de contrôle d'une boucle externe (5) de contrôle d'ajustement d'une valeur cible primaire (SIRc) d'une boucle interne de contrôle de puissance dans une installation de télécommunications, ladite boucle externe de contrôle (5) étant agencée pour alimenter la boucle interne avec la valeur cible primaire (SiRc) correspondant a un service sélectionné dynamiquement parmi au moins deux services différents présents dans l'installation, **caractérisé en ce que** chaque service est associé à au moins une valeur cible tertiaire (QI1c(j)) et au moins un indicateur de qualité tertiaire (QI1(j)) associé, et **en ce que** qu'il comprend des moyens de contrôle (9) agencés pour sélectionner dynamiquement ledit service en fonction d'un critère choisi consistant à calculer pour chaque service qui n'a pas atteint sa qualité de service l'écart entre sa valeur cible tertiaire (QI1c(j)) et son indicateur de qualité tertiaire (QI1(j)), puis à retenir le service dont l'écart est le plus grand.

13. Dispositif selon la revendication 12, **caractérisé en ce que** chaque valeur cible tertiaire est représentatives d'une qualité de service cible et chaque indicateur de qualité tertiaire est représentatif d'une qualité de service estimée.

14. Dispositif selon l'une des revendications 12 et 13, **caractérisé en ce que** lesdits moyens de contrôle (9) sont agencés pour délivrer une information représentative du service sélectionné à une boucle externe (5) opérant à partir de premier (QI1) et second (QI2) indicateurs de qualité secondaires respectivement associés à de première (QI1c) et seconde (QI2c) valeurs cibles secondaires représentatives de ladite valeur cible primaire.

15. Dispositif selon l'une des revendications, 12 à 14, **caractérisé en ce qu'**il comporte ladite boucle externe (5).

16. Dispositif selon l'une des revendications 12 à 15, **caractérisé en ce que** ladite boucle externe (5) procède à la détermination de la valeur cible primaire de façon périodique.

17. Dispositif selon l'une des revendications 12 à 16, **caractérisé en ce que** lesdits moyens de contrôle (9) sont agencés pour procéder à ladite sélection de service sur ordre.

18. Dispositif selon l'une des revendications 12 à 16, **caractérisé en ce que** lesdits moyens de contrôle (9) sont agencés pour procéder à ladite sélection de service de façon périodique.

19. Dispositif selon la combinaison des revendications 16 et 18, **caractérisé en ce que** les périodicités de la sélection de service et de la détermination de la valeur cible primaire (SIRc) sont différentes.

20. Dispositif selon la revendication 19, **caractérisé en ce que** la périodicité de ladite détermination est supérieure à celle de ladite sélection.

21. Dispositif selon l'une des revendications 12 à 20, **caractérisé en ce que** lesdits indicateurs de qualité secondaires et tertiaires sont choisis dans un groupe comprenant au moins les « BER », « BILER » et « raw BER ».

22. Dispositif selon l'une des revendications 12 à 21, **caractérisé en ce que** la valeur cible primaire est le « SIR ».

23. Station mobile, **caractérisé en ce qu'**elle comporte un dispositif selon l'une des revendications 12 à 22.

24. Equipement de réseau de télécommunications, **caractérisé en ce qu'**il comporte un dispositif selon l'une des revendications 12 à 22.

25. Utilisation du dispositif selon l'une des revendications 12 à 22, du procédé selon l'une des revendications 1 à 11, de la station mobile selon la revendication 23 et de l'équipement de réseau de télécommunications selon la revendication 24 dans les installations de télécommunications dites « à accès multiple par répartition de codes ».

26. Utilisation selon la revendication 25, dans les installations de type UMTS.

## Claims

1. A method for controlling an outer loop (5) for controlling the adjustment of a primary target value (SIRc) of a power control inner loop in a telecommunications installation, said outer loop (5) supplying said inner loop with a primary control value (SIRc) corresponding to a service dynamically selected from at least two different services present in the installation, **characterized in that** each service is associated with at least one tertiary target value (Q11 c(j)) and at least one associated tertiary quality indicator (QI1(j)), and **in that** said service is dynamically selected based on a chosen criterion consisting of calculating for each service that has not achieved its quality of service the difference between its tertiary target value (QI1c(j)) and its tertiary quality indicator (QI1(j)), then of adopting the service that has the largest difference.

2. A method according to claim 1, **characterized in that** each tertiary target value is representative of a target quality of service and each tertiary quality indicator is representative of an estimated quality of service.

3. A method according to one of the claims 1 and 2, **characterized in that** it comprises a step in which said outer loop (5) determines said primary target value (SIRc) corresponding to said selected service.

4. A method according to claim 3, **characterized in that** said outer loop (5) determines said primary target value (SIRc) based on first (QI1) and second (QI2) secondary quality indicators respectively associated with first (011c) and second (QI2c) secondary target values representative of said primary target value (SIRc).

5. A method according to one of the claims 1 to 4, **characterized in that** said outer loop periodically determines the primary target value.

6. A method according to one of the claims 1 to 5, **characterized in that** said service selection takes place when ordered.

7. A method according to one of the claims 1 to 5, **characterized in that** said service selection takes place periodically.

8. A method according to one of the claims 5 and 7, **characterized in that** the periodicity of the service selection and of the determination of the primary target value (SIRc) are different from one another.

9. A method according to claim 8, **characterized in that** the periodicity of said determination is greater than that of said selection.

10. A method according to one of the claims 1 to 9, **characterized in that** said secondary and tertiary quality indicators are chosen from a group comprising at least "BER", "BLER", and "raw BER".

11. A method according to one of the claims 1 to 10, **characterized in that** the primary target value is "SIR".

12. A device for controlling an outer loop (5) for controlling the adjustment of a primary target value (SIRc) of a power control inner loop in a telecommunications installation, said outer control loop (5) being operative to supply said inner loop with a primary control value (SIRc) corresponding to a service dynamically selected from at least two different services present in the installation, **characterized in that** each service is associated with at least one tertiary target value (QI1 c(j)) and at least one associated tertiary quality indicator (QI1(j)), and **in that** it comprises means of control (9) operative to dynamically select said service based on a chosen criterion consisting of calculating for each service that has not achieved its quality of service the difference between its tertiary target value (QI1c(j)) and its tertiary quality indicator (QI1(j)), then of adopting the service that has the largest difference.

13. A device according to claim 12, **characterized in that** each tertiary target value is representative of a target quality of service and each tertiary quality indicator is representative of an estimated quality of service.

14. A device according to one of the claims 12 and 13, **characterized in that** said means of control (9) are operative to deliver a piece of information representative of the selected service to an outer loop (5) operating based on first (QI1) and second (QI2) secondary quality indicators, respectively associated with first (QI1c) and second (QI2c) secondary target values representative of said primary target value.

15. A device according to one of the claims 12 to 14, **characterized in that** it comprises said outer loop (5)

16. A device according to one of the claims 12 to 15, **characterized in that** said outer loop (5) periodically determines the primary target value.

17. A device according to one of the claims 12 to 16, **characterized in that** said means of control (9) are operative to perform said service selection when ordered.

18. A device according to one of the claims 12 to 16, **characterized in that** said means of control (9) are operative to perform said service selection periodically.

19. A device according to one of the claims 16 and 18, **characterized in that** the periodicity of the service selection and of the determination of the primary target value (SIRc) are different from one another.

20. A device according to claim 19, **characterized in that** the periodicity of said determination is greater than that of said selection.

21. A device according to one of the claims 12 to 20, **characterized in that** said secondary and tertiary quality indicators are chosen from a group comprising at least "BER", "BLER", and "raw BER".

22. A device according to one of the claims 12 to 21, **characterized in that** the primary target value "SIR".

23. A mobile station, **characterized in that** it comprises a device according to one of the claims 12 to 22.

24. A telecommunications network equipment, **characterized in that** it comprises a device according to one of the claims 12 to 22.

25. A use of the device according to one of the claims 12 to 22, of the method according to one of the claims 1 to 11, of the mobile station according to claim 23 and of the telecommunications network equipment according to claim 24 in so-called "code division multiple access" telecommunications installations.

26. A use according to claim 25, in UMTS installations.

## Patentansprüche

1. Verfahren zur Steuerung einer externen Steuerungsschleife (5) zur Anpassung eines primären Sollwerts (SIRc) einer internen Leistungssteuerungsschleife in einer Telekommunikationsanlage, wobei die besagte externe Schleife (5) die besagte interne Schleife mit einem primären Sollwert (SIRc), welcher einem dynamisch ausgewählten Dienst unter mindestens zwei unterschiedlichen in der Anlage vorhandenen Diensten entspricht, versorgt, **dadurch gekennzeichnet, dass** man jeden Dienst mit mindestens einem tertiären Sollwert (QI1 c(j)) und mindestens einem assoziierten tertiären Qualitätsindikator (QI1(j)) assoziiert, und dass man den besagten Dienst gemäß einem gewählten Kriterium, welches darin besteht, für jeden Dienst, der seine Dienstgüte nicht erreicht hat, den Unterschied zwischen seinem tertiären Sollwert (QI1c(j)) und seinem tertiären Qualitätsindikator (QI1(j)) zu berechnen und anschließend denjenigen Dienst, der den größten Unterschied aufweist, berücksichtigt, dynamisch auswählt.

2. Verfahren nach Anspruch 1, **dadurch gekennzeichnet, dass** jeder tertiäre Sollwert für eine Zieldienstgüte repräsentativ ist und jeder tertiäre Qualitätsindikator für eine geschätzte Dienstgüte repräsentativ ist.

3. Verfahren nach einem der Ansprüche 1 und 2, **dadurch gekennzeichnet, dass** es einen Schritt umfasst, in welchem die besagte externe Schleife (5) den besagten primären Sollwert (SIRc), welcher dem besagten ausgewählten Dienst entspricht, bestimmt.

4. Verfahren nach Anspruch 3, **dadurch gekennzeichnet, dass** die besagte externe Schleife (5) den besagten primären Sollwert (SIRc) ausgehend von einem ersten (QI1) und einem zweiten (QI2) sekundären Qualitätsindikator, die jeweils mit einem ersten (QI1c) und einem zweiten (QI2c) sekundären Sollwert, welche für den besagten primären Sollwert (SIRc) repräsentativ sind, assoziiert sind, bestimmt.

5. Verfahren nach einem der Ansprüche 1 bis 4, **dadurch gekennzeichnet, dass** die besagte externe Schleife den primären Sollwert periodisch bestimmt.

6. Verfahren nach einem der Ansprüche 1 bis 5, **dadurch gekennzeichnet, dass** man die besagte Dienstauswahl auf Befehl durchführt.

7. Verfahren nach einem der Ansprüche 1 bis 5, **dadurch gekennzeichnet, dass** man die besagte Dienstauswahl periodisch durchführt.

8. Verfahren nach der Kombination der Ansprüche 5 und 7, **dadurch gekennzeichnet, dass** die Periodizitäten der Dienstauswahl und der Bestimmung des primären Sollwerts (SIRc) verschieden sind.

9. Verfahren nach Anspruch 8, **dadurch gekennzeichnet, dass** die Periodizität der besagten Bestimmung höher als die Periodizität der besagten Auswahl ist.

10. Verfahren nach einem der Ansprüche 1 bis.9, **dadurch gekennzeichnet, dass** der besagte sekundäre und der besagte tertiäre Qualitätsindikator in einer Gruppe zumindest bestehend aus "BER", "BLER" und "Roh-BER" gewählt werden

11. Verfahren nach einem der Ansprüche 1 bis 10, **dadurch gekennzeichnet, dass** der primäre Sollwert.das "SIR" ist.

12. Steuerungsvorrichtung einer externen Steuerungsschleife (5) zur Anpassung eines primären Sollwerts (SIRc) einer internen Leistungssteuerungsschleife in einer Telekommunikationsanlage, wobei die besagte externe Steuerungsschleife (5) für die Versorgung der internen Schleife mit dem primären Sollwert (SIRC), welcher einem unter mindestens zwei in der Anlage vorhandenen unterschiedlichen Diensten dynamisch ausgewählten Dienst entspricht, ausgelegt ist, **dadurch gekennzeichnet, dass** jeder Dienst mit mindestens einem tertiären Sollwert (QI1c(j)) und mindestens einem assoziierten tertiären Qualitätsindikator (QI1(j)) assoziiert ist, und dass sie Steuerungsmittel (9) umfasst, die für das dynamische Auswählen des besagten Dienstes gemäß einem gewählten Kriterium, welches darin besteht, für jeden Dienst, der seine Dienstgüte nicht erreicht hat, den Unterschied zwischen seinem tertiären Sollwert (QI1c(j)) und seinem tertiären Qualitätsindikator (QI1(j)) zu berechnen und anschließend denjenigen Dienst zu berücksichtigen, dessen Unterschied am größten ist, ausgelegt sind.

13. Vorrichtung nach Anspruch 12, **dadurch gekennzeichnet, dass** jeder tertiäre Sollwert für eine Zieldienstgüte repräsentativ ist und jeder tertiäre Qualitätsindikator für eine geschätzte Dienstgüte repräsentativ ist.

14. Vorrichtung nach einem der Ansprüche 12 und 13, **dadurch gekennzeichnet, dass** die besagten Steuerungsmittel (9) für die Ausgabe einer Information, welche für den ausgewählten Dienst repräsentativ ist, an eine externe Schleife (5) ausgehend von einem ersten (QI1) und einem zweiten (QI2) sekundären Qualitätsindikator, welche jeweils mit einem ersten (QI1c) und einem zweiten (QI2c) sekundären Sollwert, die für den besagten primären Sollwert repräsentativ sind, assoziiert sind, ausgelegt sind.

15. Vorrichtung nach einem der Ansprüche 12 bis 14, **dadurch gekennzeichnet, dass** sie die besagte externe Schleife (5) umfasst.

16. Vorrichtung nach einem der Ansprüche 12 bis 15, **dadurch gekennzeichnet, dass** die besagte externe Schleife (.5) den besagten primären Sollwert periodisch bestimmt.

17. Vorrichtung nach einem der Ansprüche 12 bis 16, **dadurch gekennzeichnet, dass** die besagten Steuerungsmittel (9) dazu ausgelegt sind, die besagte Dienstauswahl auf Befehl durchzuführen.

18. Vorrichtung nach einem der Ansprüche 12 bis 16, **dadurch gekennzeichnet, dass** die besagten Steuerungsmittel (9) dazu ausgelegt sind, die besagte Dienstauswahl periodisch durchzuführen.

19. Vorrichtung nach der Kombination der Ansprüche 16 und 18, **dadurch gekennzeichnet, dass** die Periodizitäten der Dienstauswahl und der Bestimmung des primären Sollwerts (SIRc) verschieden sind.

20. Vorrichtung nach Anspruch 19, **dadurch gekennzeichnet, dass** die Periodizität der besagten Bestimmung höher als die Periodizität der besagten Auswahl ist.

21. Vorrichtung nach einem der Ansprüche 12 bis 20, **dadurch gekennzeichnet, dass** der besagte sekundäre und der besagte tertiäre Qualitätsindikator in einer Gruppe zumindest bestehend aus "BER", "BLER" und "Roh-BER" ausgewählt werden.

22. Verfahren nach einem der Ansprüche 12 bis 21, **dadurch gekennzeichnet, dass** der primäre Sollwert das "SIR" ist.

23. Mobilstation, **dadurch gekennzeichnet, dass** sie eine Vorrichtung gemäß einem der Ansprüche 12 bis 22 umfasst.

24. Telekommunikationsnetzwerkeinrichtung, **dadurch gekennzeichnet, dass** sie eine Vorrichtung gemäß einem der Ansprüche 12 bis 22 umfasst.

25. Verwendung der Vorrichtung gemäß einem der Ansprüche 12 bis 22, des Verfahrens gemäß einem der Ansprüche 1 bis 11, der Mobilstation gemäß Anspruch 23 und der Telekommunikationsnetzwerkeinrichtung gemäß Anspruch 24 in den sogenannten Telekommunikationsanlagen mit "Vielfachzugriff im Codemultiplex".

26. Verwendung nach Anspruch 25 in den Anlagen vom Typ UMTS.
